# EUROPEAN PATENT APPLICATION

(11) **EP 4 596 864 A1**
(43) Date of publication of application: **06.08.2025**
(21) Application number: 24155039.1
(22) Date of filing: 31.01.2024
(51) Int. Cl.: F03B 3/12

(54) **PUMP RUNNER AND METHOD FOR ASSEMBLING A PUMP RUNNER**

(71) Applicant: GE Renewable Technologies, 38100 Grenoble (FR)
(72) Inventor: MATHIEU, Louis, QUEBEC, J3R 0A8 (CA); VIEIRA, Decio Lima, 12040-001 São Paulo (BR); MARTEL, Jean-Philippe, QUEBEC, J0K 1V0 (CA)
(74) Representative: Brevalex

(57) **Abstract**

The invention relates to a method for assembling a high head Francis runner comprising a crown, a band and blades extending between said crown and said band, said method comprising:
- assembling the blades (8) and the crown (6);
- then welding from outside the runner a plurality of metal plates (10) between each two neighbouring blades, the end (8a) of the blades and the plurality of metal plates thus forming the band.

## Description

### TECHNICAL FIELD AND PRIOR ART

This invention relates to a high head Francis runner and pump runner, a variation from a regular Francis runner. The invention also relates to a method of assembling such a runner, and to a hydraulic machine incorporating such a runner.

A high head Francis runner can be used as:
- a pump runner, used exclusively to pump water from one reservoir to another reservoir located in a higher altitude;
- a runner for a power storage plant (PSP): this type of runner works as a pump as described above but also works as a runner where the water flowing from the upper to the lower reservoir to generate electricity;
- a runner of a high head power plant, where the high water head forces the Francis runner design to be short in the water entrance.

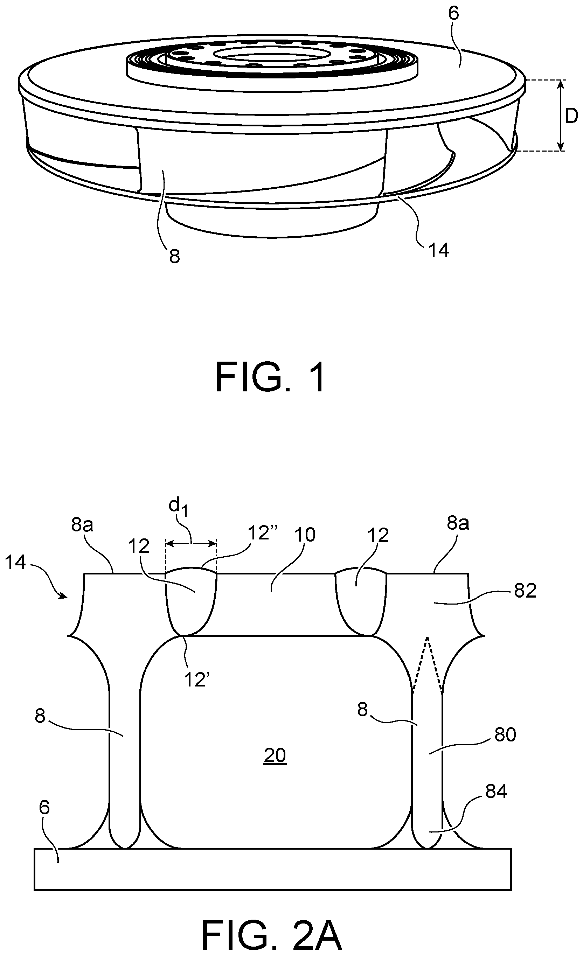

As illustrated on figure 1, it is known in the art that a runner for a pump turbine, for instance comprises a band 14, a crown 6 and blades 8 extending between the band and the crown.

Such a runner may be made of few pieces which need to be welded. Such a runner has the particularity that it can have large dimensions but the distance D between the crown and the band is rather small, for example less than 500 mm (for this reason, this kind of Francis runner is also called "narrow Francis runner" or high head Francis runner); as illustrated on figure 1, an operator has to crawl between them in order to carry out welding operations. As such, this kind of runner is difficult to manufacture, and its manufacturing requires skills that are becoming increasingly difficult to find in the existing workforce. Further, manufacturing such a runner may present health and safety issues due to the need to enter hydraulic passages of the runner in order to perform welding, grinding operations and inspection control, for example.

In such kind of high head or narrow Francis runners, it is known to split the runner band into two or more segments, so that an operator can reach the different parts of the runner to manufacture it.

There is, thus, a problem of finding a new method of manufacturing a high head Francis runner as defined above and of finding a new high head or narrow Francis runner as defined above able to be manufactured without involving difficult operations like welding and grinding from inside the runner.

### PRESENTATION OF THE INVENTION

The present invention first concerns a method for assembling a Francis runner or a high head (or narrow) Francis runner comprising a crown, a band and blades extending between said crown and said band, said method comprising:
- forming the blades and the crown, which can be cast or welded together, said blades having blade 1^{st} ends or 1st end portions, assembled to the crown and 2^{nd} ends or 2^{nd} end portions opposed to the crown;
- then welding from outside the runner a plurality of metal plates or metal covers between each two neighbouring blades, the 2^{nd} end of the blades and the plurality of metal plates or covers thus forming the band. Said method may further comprise grinding metal beads from outside the runner after the welding step.

The invention also concerns a runner for a pump turbine, comprising:
- a crown;
- a band;
- blades between said crown and said band, said blades having 1^{st} blade ends or 1st end portions assembled to the crown and 2^{nd} ends or 2^{nd} end portions opposed to the crown,
wherein said band comprises a plurality of metal plates or covers welded from the outside of the runner between the 2^{nd} end or 2^{nd} end portions of two neighbouring blades.

In a method or in a runner according to the invention:
- an outer surface of the welding beads is much larger than the inner surface which is turned towards the inner space between two neighboring blades;
- and/or the band comprises the top portions or the 2^{nd} ends, of the blades and the metal plates or covers and the welding beads between them.

In a method or a device according to the invention, the Francis runner or the high head or narrow Francis runner can be:
- a pump runner;
- or a runner for a power storage plant (PSP);
- or a runner of a high head power plant.

In a method or a device according to the invention:
- the welding or the welding beads are preferably of the U, or J, or V type, the top of the U, or J, or V shape being preferably machined to the outside of the runner, thereby giving access to the weld joint from outside the runner;
- and/or the distance between the band and the crown being less than 2000 mm or 500 mm or 400 mm;
- and/or each blade has, in a section perpendicular to its extension, a body, a first end portion and a second end portion, one of said end portions, which is assembled to said metal plates, being larger than the body and larger than the other end portion which is assembled to the crown.

The invention also concerns a blade for a turbine runner, for example a Francis runner or a high head Francis runner, having a longitudinal extension and, in a section perpendicular to said extension, a body, a first end portion and a second end portion, one of said end portions being larger than the body and larger than the other end portion. The larger end portion can be for being assembled with metal plates as described in this application and for forming the band of the runner, and the other end portion can be for being assembled with a crown of said runner.

### BRIEF DESCRIPTION OF THE DRAWINGS

- Figure 1 shows a manufacturing step of a high head Francis runner according to the prior art;
- Figures 2A and 2B show a section and a perspective view of a high head Francis runner according to the invention;
- Figures 3A - 3E show various steps of a manufacturing method according to the invention;

### DETAILED PRESENTATION OF PARTICULAR EMBODIMENTS

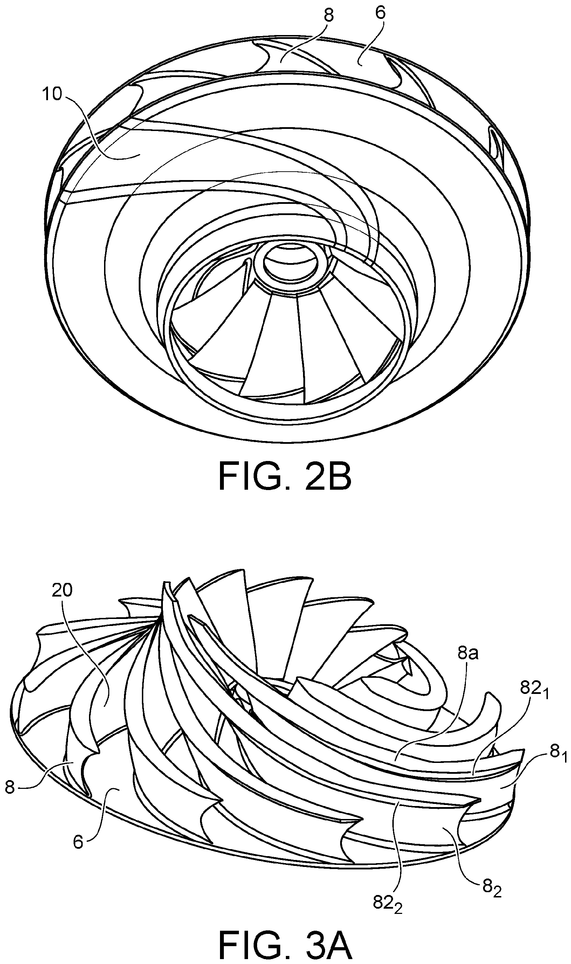

An embodiment of a high head Francis runner (or "short" or narrow runner, the distance between the band and the crown being for example less than 500 mm) according to the present invention is shown on figures 2A and 2B, figure 2A being a section along a plane AA perpendicular to the crown 6 and the band 14 as shown on figure 2B and also to the longitudinal extension of the blades 8.

This runner (fig 2A) comprises the band 14, the crown 6 and the blades 8 extending between the band. Each blade has a 1^{st} end or end portion turned to the crown and a top or a 2^{nd} end or end portion. Between the top of two neighbouring blades, a cover is formed by a plurality of metal plates 10, each of them being welded to said neighbouring blades, the welding chamfer 12 being essentially located at the outer side of the runner. The weld groove is for example of the U, or J, or V type, the top of the U, or J, or V shape being machined from the outside of the runner. The outer surface 12" of the welding chamfer 12 of width d₁ is therefore much larger than the inner surface 12' which is turned towards the inner space 20 between two neighbouring blades: on figure 2A, the width of the inner surface 12' is close to 0, while d₁ (measured perpendicularly to the longitudinal extension of the neighbouring blades) is similar to the thickness h of metal plate 10. The top portions 8a of the two neighbouring blades, and of all blades, form part of the resulting band 14 together with the metal plates 10 and the welding beads 12 between them.

Another aspect of the invention is illustrated on this figure: the blades 8 have an end portion 82 (the top portion on figure 2A) which has an enlarged section compared to the body 80 of the blade and compared to the other end portion 84 (the bottom portion on figure 2A) which is assembled to the crown 6. Usually, the blades have 2 end portions 84, 85 with decreasing sections from the body 80 of the blade to their end, as illustrated on figure 2A: the enlarged end allows blades. The enlarged end portion 82 allows the welding of metal plates 10 between two neighbouring blades and will be part of the band.

Figures 3A - 3E show various steps of a manufacturing method according to the invention, applied to 2 consecutive blades.

According to the first step (figure 3A) a crown 6 and blades 8 are already manufactured, for example they have been manufactured as a casting, by plate (a plate being used as metal base to fabricate the blades) or by forging and weld to crown. A plate can be machined to obtain the shape of the cover in the same way as for a casting, plate or forging. Only 2 blades 8₁, 8₂ show an enlarged portion 82₁, 82₂, as explained above in connexion with figure 2A, but all blades could have such shape. These enlarged portion 82₁, 82₂ will be part of the band.

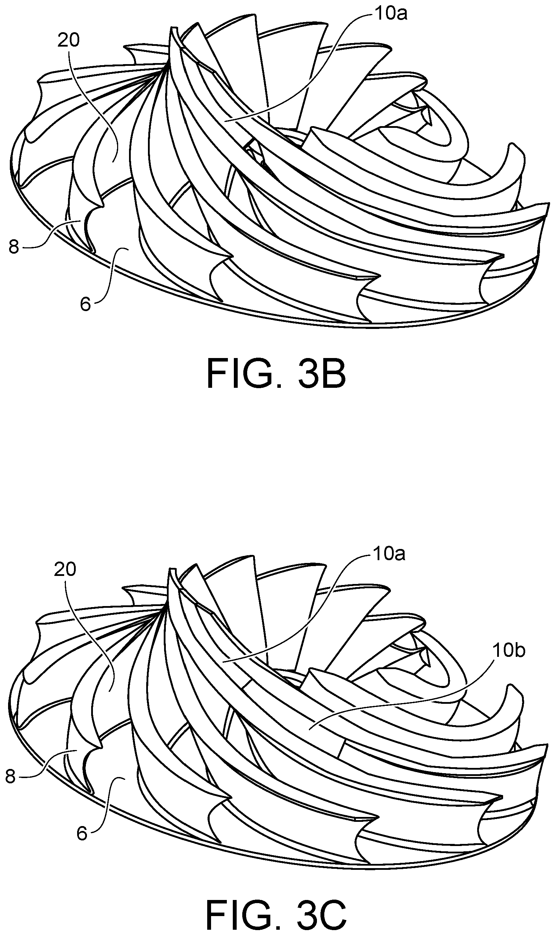

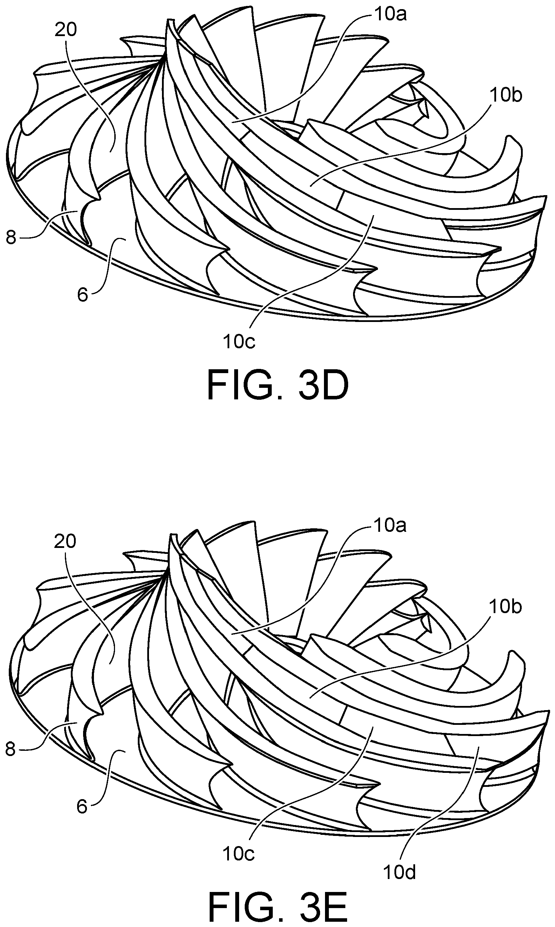

Each pair of 2 neighbouring blades is separated by a space 20 (see figure 2A) which is then closed by a plurality (for example 4) of metal plates 10 positioned and welded to the top of the blades, preferably to enlarged portions 82, 82₁, 82₂. On the example of figures 3B-3E, a first metal plate 10a is positioned and welded (figure 3B), possibly with correction of internal root passe, then a second metal plate 10b (figure 3C), then a third metal plate 10c (figure 3D), and finally a fourth metal plate 10d (figure 3E) which closes the space between both neighboring blades 8₁, 8₂. The total length L (measured parallel to the longitudinal extension of the neighbouring blades) of the several metal plates is approximately that of the neighboring blades.

Welding and other following steps (like grinding for example) are thus performed from outside the runner, so that an operator does not have to crawl and perform a difficult and unhealthy welding operation as explained above in connection with figure 1: residual grinding operations can be performed from inside, but does not require an operator to spend a long time inside the runner since this can be done progressively before a consecutive plate 10b-10d is added.

It is clear that welding beads 12 can be seen from outside the runner and show that a manufacturing method according to the invention was performed.

## Claims

1. A method for assembling a high head Francis runner comprising a crown (6), a band (14) and blades (8, 8₁, 8₂) extending between said crown and said band, said method comprising:
- assembling the blades (8, 8₁, 8₂) and the crown (6), the blades having ends opposed to the crown;
- then welding from outside the runner a plurality of metal plates (10, 10a, 10b, 10c, 10d) between each two neighbouring blades (8), said end (8a) of the blades and the plurality of metal plates thus forming the band.

2. A method as in claim 1, comprising grinding metal beads from outside the runner after the welding step.

3. A method as in claim 1 or 2, said blades and said crown being machined from cast, or plate or forging.

4. A method as in any of claims 1 to 3, an outer surface (12") of the welding beads (12) being much larger than the inner surface (12') which is turned towards the inner space (20) between two neighbouring blades.

5. A method as in any of claims 1 to 4, said high head Francis runner being:
- a pump runner;
- or a runner for a power storage plant (PSP);
- or a runner of a high head power plant.

6. A method as in any of claims 1 to 5, the weld groove being of the U, or J, or V type, the top of the U, or J, or V shape being machined from the outside of the runner.

7. A method as in any of claims 1 to 6, the distance between the band and the crown being less than 2000 mm.

8. A method as in any of claims 1 to 7, each blade having, in a section perpendicular to its extension, a body (80), a first end portion (82, 82₁, 82₂) and a second end portion (84), one of said end portions (82, 82₁, 82₂), with is assembled to said metal plates (10, 10a, 10b, 10c, 10d), being larger than the body (80) and larger than the other end portion (84) which is assembled to the crown (6).

9. A high head Francis runner, comprising:
- a crown (6);
- a band (14);
- blades (8) between said crown and said band,
wherein said band comprises a plurality of metal plates (10, 10a, 10b, 10c, 10d) welded from the outside of the runner between the ends of two neighbouring blades (8).

10. A runner as in claim 9, an outer surface (12") of the welding beads (12) being much larger than the inner surface (12') which is turned towards the inner space (20) between two neighbouring blades.

11. A runner as in claim 9 or 10, the band (14) comprising the top portions (8a, 82₁, 82₂) of the blades and the metal plates (10) and the welding beads (12) between them.

12. A runner as in any of claims 9 to 11, the weld groove being of the U, or J, or V type.

13. A runner as in any of claims 9 to 12, the distance between the band and the crown being less than 2000 mm.

14. A high head Francis runner as in any of claims 9 to 13, said high head Francis runner being:
- a pump runner;
- or a runner for a power storage plant (PSP);
- or a runner of a high head power plant.

15. A high head Francis runner as in any of claims 9 to 14, each blade having, in a section perpendicular to its extension, a body (80), a first end portion (82) and a second end portion (84), one of said end portions (82), which is assembled to said metal plates (10, 10a, 10b, 10c, 10d), being larger than the body (80) and larger than the other end portion (84) which is assembled to the crown (6).
